# EUROPEAN PATENT APPLICATION

(11) **EP 4 052 933 A1**
(43) Date of publication of application: **07.09.2022**
(21) Application number: 22159416.1
(22) Date of filing: 01.03.2022
(51) Int. Cl.: B60C 29/02, F16K 15/20, B60C 29/00

(54) **PLASTIC SNAP-IN VALVE FOR RUBBERIZED WHEELS**

(30) Priority: 05.03.2021 IT 202100005228
(71) Applicant: Wonder SPA, 26100 Cremona (CR) (IT)
(72) Inventor: CAPELLI, Andrea, I-26100 CREMONA (IT); CAZZANTI, Stefano, I-26100 CREMONA (IT); GALLI, Giancarlo, I-26100 CREMONA (IT); GOSI, Matteo, I-26100 CREMONA (IT)
(74) Representative: Gualeni, Nadia

(57) **Abstract**

A plastic snap-in valve (1) according to the present invention comprises: a hollow and cylindrical valve body (2) entirely made of plastic material; an actuating mechanism (3) arranged inside said valve body (2); a rubber ring (4) which partially covers said valve body (2) and comprises an annular groove (45) followed by a circumferentially protruding ring head (44). A characterizing feature is that the valve body (2) extends inside the rubber ring (2) up to the proximal end (12) of the valve (1), i.e., up to the zone which is intended to be radially compressed for installing the valve on the rim of the rubberized wheel. Advantageously, the presence of the valve body guarantees an optimal resistance of the proximal end against leakage from the rim hole caused by the pressure thrust inside the rubber wheel.

## Description

The present invention relates to a plastic valve for inflating tires of rubberized wheels, in particular of vehicles, wherein the term "vehicles" means motorcars, vans, motorcycles, and means of locomotion on tires in general.

Specifically, the invention relates to a plastic valve of the snap-in type, i.e., of the type which can be associated with the metal wheel rim by means of elastic snap-in locking means.

Such valves generally consist of a main body, called a valve body or armature, of cylindrical tubular shape which acts as a structural housing for an inner mechanism having the task of connecting the inside of said rubberized wheels with the outside environment and allowing a passage of air, if necessary. The valve body is partially lined with a rubber ring which acts as a seal when the valve is mounted on the wheel through a hole drilled in the rim.

The valve body of plastic snap-in valves is made of plastic material, which makes these valves lighter, easily disposable, and recyclable compared to the conventional valves with valve bodies made of metal material, typically brass or aluminum.

An example of known plastic snap-in valves is shown in US 4 171 119 A, which describes a valve having a plastic valve body partially covered by a rubber ring suitably shaped to make the proximal end, or head of the valve, intended to exit upstream of the rim hole at the installed location. In such known valves, the valve body ends well before the proximal end of the valve, thus consisting only of the rubber ring. This construction choice has some disadvantages. A snap-in valve made in this manner may not provide sufficient anchoring of the rubber ring to the valve body. Furthermore, a snap-in valve made in this manner may not have sufficient resistance to leakage from the rim hole during assembly or under high internal pressure. And again, a snap-in valve made in this manner may not provide sufficient sealing against air leakages from the inner tube.

One of the critical points of snap-in valves is the anchoring of the rubber ring to the valve body. During the operation of fixing the valve on the rim, or in case of its removal, the valve is subject to traction forces which could lead to the detachment of the rubber ring from the valve body with consequent breakage of the valve itself or more simply an incomplete or incorrect assembly for the movement of the rubber ring. Therefore, it is important to ensure the optimal anchoring between these two valve components.

Another critical point of snap-in valves is related to the correct resistance of the valve itself to escaping from the rim hole caused by the pressure thrust inside the rubberized wheel. Therefore, it is important to ensure optimal resistance of the proximal end of the valve.

Another critical point of snap-in valves is related to the correct sealing against air leakage from the inner tube in the range of possible temperatures and pressures. Indeed, the pressurized air could seep out between the rubber ring and the rim hole. Therefore, it is important to ensure optimal resistance of the proximal end of the valve. Furthermore, the pressurized air may seep in between the rubber ring and the valve body. Therefore, it is important to ensure optimal sealing between these two valve components.

Therefore, in the field of plastic snap-in valves for inflating tires of rubberized wheels, the need is felt for valves provided with optimal anchoring and sealing between the rubber ring and the valve body, as well as optimal sealing of the proximal end of the valve intended to be inserted into the rim hole in the installed position.

It is the object of the invention to overcome the limitations of known plastic snap-in valves and to meet the needs of the sector.

Such a requirement is achieved by a plastic snap-in valve for inflating tires of rubberized wheels according to claim 1. Other embodiments of the valve according to the invention are described in the subsequent claims.

Further features and advantages of the present invention will be more comprehensible from the following description of a preferred embodiment thereof given by way of non-limiting examples, in which:

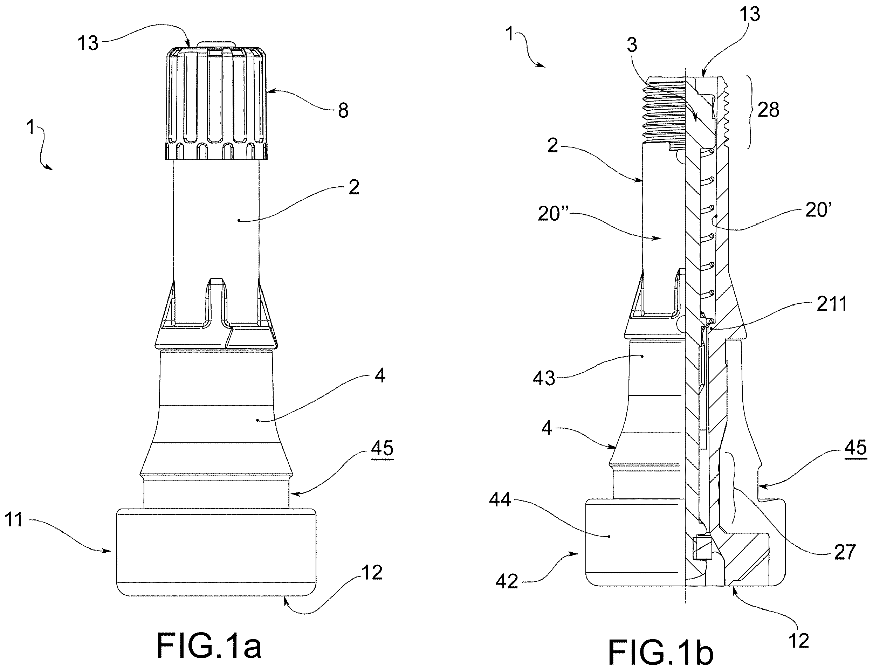

- figure 1a shows a front view of a plastic snap-in valve for inflating tires of rubberized wheels according to the present invention;
- figure 1b shows a partial cross-section front view of the valve in figure 1a;
- figure 2 shows a cross-section front view of the valve in figure 1, in the condition installed inside the hole of a wheel rim;
- figure 3a shows an axonometric section view of a component of the valve according to the present invention, in particular, the valve body made of plastic;
- figure 3b shows a front view of the component in figure 3a.

With reference to the aforesaid figures, reference numeral 1 indicates a plastic snap-in valve for inflating tires of rubberized wheels according to the present invention as a whole.

The valve 1 is adapted to be fitted on a wheel rim 52 of a rubberized wheel by means of elastic snap-in locking means.

The valve 1 substantially comprises a valve body 2, also named an armature, an actuating mechanism 3 arranged inside said valve body 2, and a rubber ring 4 adapted to partially cover said valve body 2.

The valve 1 comprises a head 11 arranged at a proximal end 12 relative to a rim 52 at the installed position. A closing cap 8 is screwed to the opposite end, indicated as the distal end 13.

The distal end 13 of the valve 1 is insertable through a hole in the rim 52 while the proximal end 12, and in particular the head 11, is intended to engage said hole for fixing the valve in place on the rim 52.

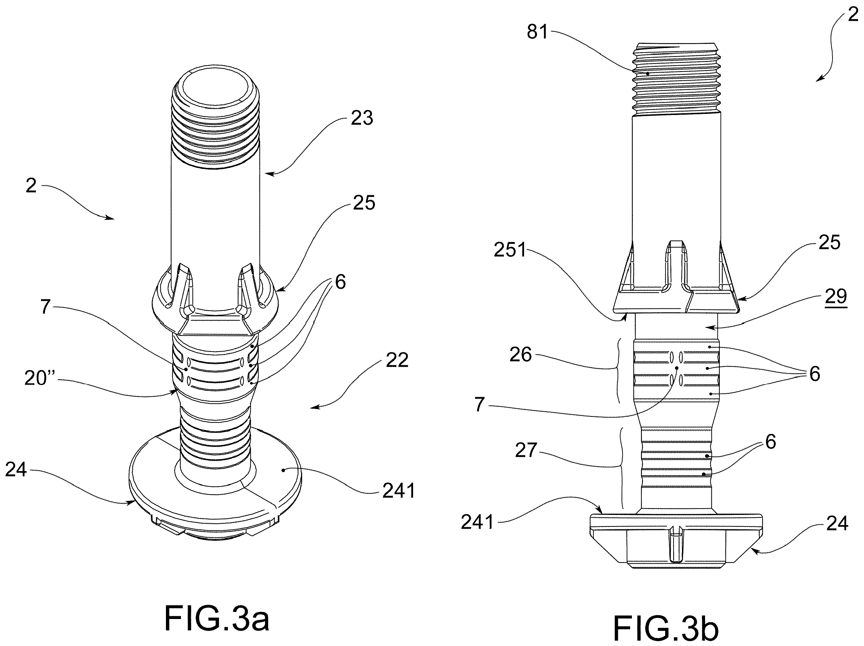

The valve body 2, shown in detail in figures 3a and 3b, has a cylindrical shape, is axially hollow, and is intended to connect the inside of a rubberized wheel with the outside environment and to allow a passage of air and a possible tire repair fluid.

In particular, the valve body 2 has an outer cylindrical symmetry surface 20" and an inner cylindrical symmetry surface 20'.

In an example embodiment, the actuating mechanism 3 is screwed at a threaded portion of the inner cylindrical symmetry surface 20'.

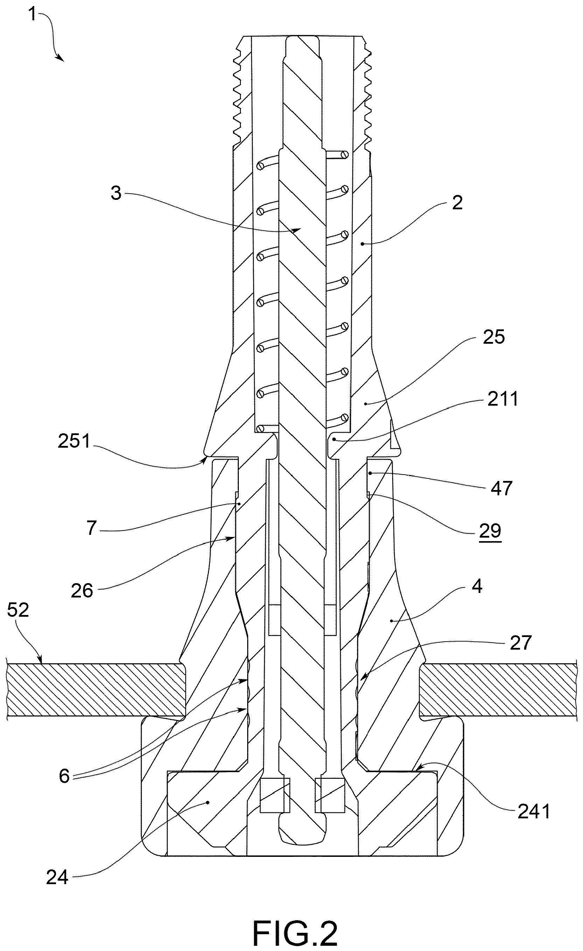

In a further example embodiment, shown in figure 2, the actuating mechanism 3 is mechanically engaged, e.g., by means of a bayonet coupling, at a shaped portion 211 of the inner cylindrical symmetry surface 20'.

The valve body 2 is partially covered by a rubber ring 4 which acts as a sealing ring when the valve 1 is mounted on the wheel.

It is worth noting that the valve 1 can be mounted on a tubeless tire wheel by means of the cooperation between an annular groove 45 of the rubber ring 4 and a hole made in the metal rim of the wheel itself.

The valve body 2 shown in figures 3a and 3b, is a one-piece body, totally made of plastic material.

The valve body 2 extends within the rubber ring 4 at least at the annular groove 45 of the rubber ring 4, i.e., in a zone intended to be radially compressed by the rim 52. Advantageously, the presence of the valve body 2 in the rubber ring 4 at the annular groove 45 guarantees an optimal resistance of the proximal end of the valve 1 against leakage from the rim hole caused by the pressure thrust inside the rubber wheel.

Preferably, the valve body 2 extends within the rubber ring 4 for the entire longitudinal development of the valve 1, i.e., up to the proximal end 12.

The valve body 2 comprises a distal portion 23 which defines the distal end 13 of the valve 1, and a proximal portion 22 which at least partially defines the proximal end 12 of the valve 1.

The distal portion 23 of the valve body 2 has, at its free end, an outer thread 81 for receiving the closing cap 8 and being coupled to the inflation systems.

Preferably, the distal portion 23 comprises a circumferentially protruding backing element 25 just before the beginning of the proximal portion 22, and thus in a substantially central position of the valve body 2.

The backing element 25 defines an upper abutment surface 251, transverse relative to the flat valve body 2, facing towards the proximal portion 22.

The backing element 25, on the opposite side from the upper abutment surface 251, is substantially tapered toward the distal portion 23.

The shape of said backing element 25 assists the insertion of the rubber ring 4 during assembly, due to the tapering toward the distal portion 23, and locks its sliding toward the distal portion 23 by virtue of the upper abutment surface 251. However, it is worth noting that said backing element 25 is sized to prevent removal of the valve 1 from the rim hole in the case of thrust from the outside inwards with a slight rotational motion.

The proximal portion 22 of the valve body 2 is adapted to be covered by the rubber ring 4, and thus to be encased therein.

The proximal portion 22 comprises, at the free end, a body head 24 circumferentially protruding from the valve body 2 and having the largest diameter of the entire remaining valve body 2.

The body head 24 defines a lower abutment surface 241, transverse to the flat valve body 2, facing towards the distal portion 21.

Preferably, as shown in figure 2, the body head 24 is fully encased in the rubber ring 4, without axially protruding underneath it.

The rubber ring 4 thus completely covers the proximal portion 22 of the valve body 2.

The rubber ring 4 comprises a distal portion 43 and a proximal portion 42 which at least partially defines the proximal end 12 of the valve 1.

The distal part 43 of the rubber ring 4 comprises an inwardly-directed annular protrusion 47 intended to engage a corresponding locking groove 29 of the valve body 2. Such a solution prevents the slipping of the rubber ring 4 during the assembly process of the valve 10.

Furthermore, the backing element 25 with the respective upper abutment surface 251 and the body head 24 with the respective lower abutment surface 241 also define a seat for the rubber ring 4 which prevents it from slipping.

The proximal portion 42 of the rubber ring 4 comprises, at its free end, a circumferentially protruding ring head 44 having the largest diameter of the entire remaining rubber ring 4.

The proximal portion 42 of the rubber ring 4 comprises, downstream of the ring head 44, an annular groove 45 adapted to accommodate the edge of the rim 52, as shown in figure 2.

The outer surface 20" of the valve body 2 intended to be covered by the rubber ring 4 comprises a plurality of annular ribs 6, such as shaped in a sawtooth pattern. The ribs 6 are made by a succession of reliefs and indentations on the outer surface 20".

The proximal portion 22 of the valve body 2 comprises a retaining zone 26, arranged above the annular groove 45 of the rubber ring 4, wherein the outer surface 20" comprises a plurality of annular ribs 6, and preferably also at least one longitudinal reinforcing rib 7 superimposed on said annular ribs 6. Said ribs are intended to increase the retention force of the rubber ring 4 and prevent it from slipping off the valve body 2 during the mounting of valve 1 on the wheel rim.

The proximal portion 22 of the valve body 2 comprises a sealing zone 27 arranged at the annular groove 45 of the rubber ring 4, wherein the outer surface 20" comprises a plurality of annular ribs 6. Said ribs are intended to increase the seal against air leakage between the rubber ring 4 and the valve body 2. Indeed, such ribs are positioned at the annular groove 45 of the rubber ring 4, i.e., in a zone intended to be radially compressed by the rim 52. Advantageously, due to the radial thrust of the rim 52, the rubber ring 4 adheres to the annular ribs 6 until it mimics their shape. Since the ribs 6 are in the form of reliefs and indentations, a tortuous, wavy path is formed between the rubber ring 4 and the valve body 2 at the annular groove 45, which makes the passage of air difficult and thus improves the tightness of the valve 1 even in case of temperature changes or movement of the valve in the rim hole.

As mentioned above, the body head 24 is encased within the rubber ring 4.

Thus, the valve body 2 must be inserted inside the rubber ring 4 so that the proximal portion 22 of the valve body 2 is completely covered by the rubber ring 4 to make the valve 1.

Preferably, the rubber ring 4 is made of ethylene-propylene rubber, preferably EPDM (Ethylene-Propylene Diene Monomer). Preferably, the rubber ring 4 is made of 100% EPDM rubber. This type of rubber provides excellent resistance to atmospheric agents, ozone, diluted acids and chemical agents in general, as well as having good mechanical properties and excellent stability at varying of temperatures.

The operation of the snap-in valve 1 for rubberized wheels with the valve body 2 entirely made of plastic according to the invention, as well as its assembly methods and its mounting operations on the wheel, in addition to complying with all the main required technological standards, are entirely similar to the operation, assembly and mounting of conventional snap-in valves.

Innovatively, a valve 1 according to the present invention is extremely lightweight, while at the same time resistant to mechanical stresses, pressures, and external aggressions.

Advantageously, a valve 1 according to the present invention is easily disposable and recyclable even considering recent requirements in terms of lead content in metals.

First of all, replacing the one-piece brass valve body with a plastic valve body entirely made of plastic makes the valve considerably lighter because the specific weight of plastic is almost eight times lower than that of brass. The lighter weight of the valve means a saving in the consumption of fuel used by the vehicle for its handling and thus a lower economic cost. It also reduces the mechanical stresses acting on the sealing element, which is thus in a safer condition. The valve manufacturing costs are also greatly reduced, as the use of brass, which is a nobler and notoriously more expensive material than plastic, is limited or eliminated. Additionally, the one-piece valves made entirely of plastic are much easier to dispose of in their entirety without any rubber ring separation operations, thus speeding up time and further reducing costs.

Advantageously, a valve 1 according to the present invention with a plastic valve body and a 100% EPDM rubber ring is much more resistant to chemical aggression, weathering, corrosion, etc.

Advantageously, a valve 1 according to the present invention is provided with optimal anchoring and sealing between the rubber ring and the valve body, as well as optimal strength of the proximal end of the valve intended to be inserted into the rim hole at the installed position.

The presence of the valve body inside the rubber ring at the annular groove not only provides greater reinforcement to the valve when it is inserted on the rim and a mounting tool is used but also increases its resistance to leakage caused by inner rubber pressure by 40%.

The presence of a retaining zone with ribs on the outer side surface of the valve body increases the mechanical anchoring of the rubber ring and the adhesion to the valve body itself and prevents slippage between the parts during the assembly and disassembly of the valve on the wheel rim.

The presence of a sealing zone with annular grooves on the outer side surface of the valve body at the annular groove of the rubber ring increases the seal against air leakage.

A person skilled in the art may make many changes and variants to the valve described above, all contained within the scope of protection of the invention defined by the following claims.

## Claims

1. A plastic valve (1) of the snap-in type for rubberized wheels, having a proximal end (12) for the connection with said rubberized wheels and an opposite distal end (13), said valve (1) comprising:
- a hollow valve body (2) of cylindrical shape adapted to connect the interior of said rubberized wheels to the outside environment and allow the air to pass, said valve body (2) being made entirely of plastic material;
- an actuating mechanism (3) of said valve (1) arranged inside said valve body (2);
- a rubber ring (4) adapted to partially cover said valve body (2), comprising an annular groove (45) followed by a circumferentially protruding ring head (44); **characterized in that** the valve body (2) extends into the rubber ring (2) up to the proximal end (12).

2. A valve (1) according to claim 1, wherein the valve body (2) comprises a circumferentially protruding body head (24) completely arranged within the ring head (44) of the rubber ring (4).

3. A valve (1) according to claim 1 or 2, wherein the valve body (2) comprises a distal backing element (25) defining an upper abutment surface (251) and a body head (24) defining a lower abutment surface (241), wherein said lower abutment surfaces create a seat for the rubber ring (4).

4. A valve (1) according to any one of the preceding claims, wherein the rubber ring (4) distally comprises an inwardly-directed annular protrusion (47) intended to engage a corresponding locking groove (29) of the valve body (2).

5. A valve (1) according to any one of the preceding claims, wherein said valve body (2) comprises a retaining zone (26), arranged above the annular groove (45) of the rubber ring (4), wherein an outer surface (20") of said valve body (2) comprises at least one shaped annular retaining rib (6) for said rubber ring (4).

6. A valve (1) according to claim 5, wherein the retaining zone (26) comprises at least one longitudinal reinforcing rib (7) which overlaps said at least one shaped annular rib (6).

7. A valve (1) according to any one of the preceding claims, wherein the valve body (2) comprises a sealing zone (27), arranged at the annular groove (45) of the rubber ring (4), wherein an outer surface (20") of said valve body (2) comprises at least one shaped annular sealing rib (6) against air leaks between the rubber ring (4) and the valve body (2).

8. A valve (1) according to claim 7, wherein the sealing zone (27) comprises a plurality of ribs (6) in the form of reliefs and indentations on the outer surface (20").

9. A valve (1) according to any one of the preceding claims, wherein the rubber ring (4) is made at least partially of EPDM (Ethylene-Propylene Diene Monomer) rubber.

10. A valve (1) according to any one of the preceding claims, wherein the rubber ring (4) is made of 100% EPDM rubber.
